# EUROPÄISCHE PATENTANMELDUNG

(11) **EP 4 778 798 A1**
(43) Veröffentlichungstag der Anmeldung: **22.07.2026**
(21) Anmeldenummer: 25222692.3
(22) Anmeldetag: 11.12.2025
(51) Int. Cl.: B60W 30/06, B60W 30/09, B60W 50/14

(54) **FAHRZEUG, FAHRASSISTENZSYSTEM UND VERFAHREN ZUR GESONDERTEN BEHANDLUNG VON HINDERNISSEN AN TRAINIERTEN TRAJEKTORIEN**

(30) Priorität: 17.01.2025 DE 102025101557
(71) Anmelder: Volkswagen Aktiengesellschaft, 38440 Wolfsburg (DE)
(72) Erfinder: KOCH, Niklas, 38440 Wolfsburg (DE); SEELAND, Jana, 38440 Wolfsburg (DE); HOPP, Christian, 38440 Wolfsburg (DE)

(57) **Zusammenfassung**

Es wird ein Verfahren vorgeschlagen zum Betreiben eines Fahrassistenzsystems (10) eines Fahrzeugs (100) umfassend die folgenden Schritte:
- Führen (A) des Fahrzeugs (100) entlang einer durch das Fahrassistenzsystem (10) angelernten Trajektorie,
- Erfassung (B) von wenigstens einem unbekannten Hindernis (13, 14) entlang der Trajektorie, wobei das Hindernis (13, 14) zum Zeitpunkt des Anlernens der Trajektorie nicht erkannt wurde, und
- Entweder Ausgeben (C1) einer Abfrage an einen Fahrer des Fahrzeugs (100) bezüglich des Durchführens einer Maßnahme zur Behandlung des unbekannten Hindernisses durch das Fahrassistenzsystem (10), und/oder
- Bearbeiten (C2) der Trajektorie in einer Kommunikationseinrichtung (15) durch den Fahrer.

## Beschreibung

Die Erfindung betrifft ein Verfahren zum Betreiben eines Fahrassistenzsystems eines Fahrzeugs, ein Fahrassistenzsystem, ausgebildet zur Durchführung eines solchen Verfahrens sowie ein Fahrzeug aufweisend ein solches Fahrassistenzsystem.

Bei einer durch ein Fahrassistenzsystem eines Fahrzeugs trainierten Trajektorie kann es sein, dass auf der Trajektorie einige Hindernisse vorkommen, die speziell behandelt werden sollten, z.B. Büsche oder Bordsteine.

Hindernisse wie z.B. Büsche können nach dem Trainieren der Trajektorie die Form ändern und in die Trajektorie hineinragen. Die Umfeldsensorik des Fahrzeugs würde den Busch als Hindernis erkennen und die Trajektorie wäre damit möglicherweise nicht mehr befahrbar, obwohl der Fahrer bei manueller Fahrt die Trajektorie abfahren könnte. Andererseits kann es sinnvoll sein, gewisse erkannte Hindernisse als überfahrbar zu kennzeichnen, z.B. in Situationen wie Unkraut auf einer gepflasterten Einfahrt.

Verfahren zur Unterscheidung von befahrbaren und nicht-befahrbaren Hindernissen entlang einer Trajektorie sind beispielsweise aus der DE 10 2015 205 142 A1, der DE 10 2019 130 894 A1 und der DE 10 2014 014 219 A1 bekannt.

Der Erfindung liegt die Aufgabe zugrunde, ein Verfahren zum Betreiben eines Fahrassistenzsystems bereitzustellen, welches eine optimierte Behandlung von Hindernissen entlang einer Trajektorie ermöglicht.

Diese Aufgabe wird durch die im Anspruch 1 angegebenen Merkmale gelöst. Weitere vorteilhafte Ausgestaltungen der Erfindung sind in den Unteransprüchen beschrieben.

Das Verfahren ermöglicht es vorteilhaft, die Behandlung von Hindernissen entlang einer angelernten Trajektorie zu verbessern, da anhand einer Eingabe durch den Fahrer bzw. den Nutzer eine im Hinblick auf die Art des Hindernisses angepasste Maßnahme durch das Fahrassistenzsystem durchgeführt werden kann. Dies führt vorteilhaft dazu, dass es zu weniger Systemabbrüchen bzw. Fahrtabbrüchen durch das Fahrassistenzsystem kommt. Diese würden ansonsten auftreten, wenn bei einer erneuten Fahrt entlang einer im Vorfeld angelernten Trajektorie eine Veränderung eines zuvor als von dem Fahrassistenzsystem als be-, unter-, über-, oder durchfahrbar eingestuften Hindernisses (z.B. Bordstein, Blätter, Gräser, ...) eintritt und das Fahrassistenzsystem dieses nun bei der erneuten Fahrt als nicht be-, unter-, über-, oder durchfahrbar einstuft und die Fahrt möglicherweise abbricht.

Die Ausgabe der Abfrage an den Fahrer kann dabei über eine Anzeige im Fahrzeug, beispielsweise über das Armaturenbrett oder ein Head-up-Display, erfolgen. Die Abfrage kann den Fahrer dazu auffordern, eine Entscheidung zu treffen, wie das Fahrassistenzsystem mit dem unbekannten Hindernis umgehen soll.

Dadurch, dass die Bewertung des Hindernisses durch den Fahrer bzw. einen Nutzer des Fahrzeugs erfolgt, ist das Verfahren besonders zuverlässig. Insbesondere in sicherheitsrelevanten Situationen, in denen sich beispielsweise ein Kind in oder an einem Busch befindet, kann so zuverlässig beurteilt werden, wie mit dem Hindernis umgegangen werden soll. Denn während an einem Busch unter Umständen dicht vorbeigefahren werden könnte, ist dies nicht gewollt, wenn sich zusätzlich ein Kind in der Nähe befindet.

Während des Anlernens, auch als Teach-In bezeichnet, wird die Trajektorie erstmalig aufgenommen und entsprechende Daten für die Trajektorie generiert, welche insbesondere auch Daten bezüglich erkannter Hindernisse entlang der Trajektorie umfassen. Im Zuge des Verfahrens können diese Daten entsprechend bei einer erneuten Fahrt entlang der Trajektorie geändert und/oder ergänzt werden.

Unter einem zuvor nicht erkannten Hindernis kann dabei ein Hindernis verstanden werden, welches zuvor nicht entlang der Trajektorie im Erfassungsbereich der Sensorik vorhanden war, oder ein zuvor bereits vorhandenes Hindernis, welches jedoch seine Form und/oder Position verändert hat und somit von der Sensorik als unbekannt eingestuft wird.

Es kann dabei entweder von dem Fahrassistenzsystem eine Abfrage an den Fahrer gestellt werden, wenn das Fahrassistenzsystem beim erneuten Abfahren der Trajektorie ein neues oder ein verändertes Hindernis mittels einer Sensorik detektiert. Der Fahrer kann dann entscheiden, welche Maßnahme oder Maßnahmen im Hinblick auf das Hindernis eingeleitet werden sollen. Ferner kann der Fahrer proaktiv die Trajektorie bearbeiten, wenn der Fahrer beispielsweise feststellt, dass sich in einer Hofauffahrt gebildeter Bewuchs das Fahrassistenzsystem beeinträchtigt oder in Zukunft beeinträchtigen könnte.

Insbesondere kommt das Verfahren bei einer automatisierten oder zumindest teilautomatisierten Fahrt entlang der Trajektorie zum Einsatz.

Bevorzugt wird das Verfahren während eines assistierten oder automatisierten Parkvorgangs verwendet. Ferner ist es möglich, dass ein räumlicher Bereich, welcher im Zuge des Verfahrens verändert wurde, in der Form einer digitalen Karte auch in anderen Fahrfunktionen bereitgestellt werden kann.

Wenn das Hindernis bei späteren Fahrten entlang der Trajektorie nicht mehr erkannt wird, dann kann das Hindernis aus den Trajektoriendaten gelöscht werden. Ein erneutes Auftreten des Hindernisses muss dann erneut bestätigt werden.

Bevorzugt ist das Hindernis Vegetation, ein Lebewesen, ein Bodenbereich, ein Bordstein, ein Gebäude oder eine Infrastruktureinrichtung, wie beispielsweise Straßenschilder, Ampeln oder Straßenlaternen. Hindernisse können entweder bei der weiteren Fahrt hinzukommen oder sich verändern, beispielsweise Büsche, Gräser, Laub oder Unkraut auf gepflastertem Untergrund, welche in die Trajektorie reinwachsen, oder statisch sein, z.B. ein Bordstein, eine Wand, ein Kurvenabschnitt oder ein Blumenbeet. Die Vielfalt der erfassten Hindernisse ermöglicht eine umfassende und zuverlässige Führung des Fahrzeugs entlang der Trajektorie.

Bevorzugt erfolgt das Erfassen des Hindernisses durch den Fahrer oder durch eine Sensorik des Fahrassistenzsystems. Beispielsweise kann der Fahrer proaktiv die Trajektorie verändern, wenn dieser das Hindernis selbst erkannt hat, oder der Fahrer kann erst auf eine Aufforderung durch das Fahrassistenzsystem reagieren, welches das Hindernis erfasst. Die Sensorik wertet zur Erkennung des Hindernisses insbesondere Bilddaten aus, beispielsweise durch semantische Segmentierung, vergleicht Bilddaten aus dem Anlernen mit Bilddaten aus der aktuellen Fahrt und erfasst mögliche Unterschiede.

Bevorzugt umfasst die Maßnahme ein Abbrechen des Führens des Fahrzeugs entlang der Trajektorie. Dies kann beispielsweis dann der Fall sein, wenn das Hindernis nicht be-, unter-, über-, oder durchfahrbar ist, beispielsweise auch nur temporär. Beispielsweise kann das Hindernis ein Lebewesen sein. Das Abbrechen kann dabei insbesondere ein Abbrechen des Führens des Fahrzeugs durch das Assistenzsystem sein.

Bevorzugt umfasst die Maßnahme das Umfahren des Hindernisses. Wenn der Fahrer beispielsweise feststellt, dass das Hindernis nicht be-, unter-, über-, oder durchfahrbar ist, beispielsweise, da es sich um ein Blumenbeet handelt oder um starke Vegetation, aber ausreichend Platz um Umfahren bereitsteht, kann diese Maßnahme ergriffen werden. Unter dem Umfahren wird dabei insbesondere eine Führung des Fahrzeugs um das Hindernis herum verstanden.

Bevorzugt überwacht der Fahrer das Umfahren des Hindernisses, oder das Fahrzeug wird während des Umfahrens des Hindernisses durch den Fahrer geführt. Der Fahrer kann sich während des Überwachens in dem Fahrzeug oder in der Nähe des Fahrzeugs befinden. Ferner kann der Fahrer die Überwachung über eine Kommunikationseinrichtung des Fahrzeugs mit einer Anzeigeeinrichtung, beispielsweise ein Human-Machine-Interface (HMI), vornehmen. Zusätzlich ist es möglich, dass der Fahrer über eine solche Kommunikationseinrichtung einen Bereich zum Umfahren des Hindernisses vorgibt.

Bevorzugt umfasst die Maßnahme ein, insbesondere einmaliges oder dauerhaftes, Ignorieren des Hindernisses. Bevorzugt muss der Fahrer aus Sicherheitsgründen bestätigen, insbesondere durch eine Eingabe in die Kommunikationseinrichtung, dass die Trajektorie ignorierte Hindernisse enthält.

Bevorzugt umfasst die Maßnahme das Vergrößern oder das Verkleinern eines Sicherheitsabstandes zu dem Hindernis. Dies kann beispielsweise vorteilhaft sein, wenn sich das Fahrzeug einem Bordstein nähert, zum Schutz der Felgen.

Bevorzugt umfasst die Maßnahme das Erhöhen oder das Verringern einer Geschwindigkeit des Fahrzeugs während der Fahrt entlang des Hindernisses. Dies kann beispielsweise vorteilhaft sein, wenn das Fahrzeug langsam auf einen Bordstein fahren soll. Ferner kann die Sicherheit durch eine angepasste Fahrweise erhöht werden.

Bevorzugt wird das Hindernis in den Daten der Trajektorie gespeichert. Dies erfolgt insbesondere bei einer erstmaligen Erkennung eines Hindernisses, oder wenn bereits vorhandene Daten zu einem Hindernis aktualisiert werden müssen, wenn durch den Fahrer eine bestimmte Maßnahme festgelegt bzw. das Hindernis neu eingestuft wurde.

Bevorzugt wird das Hindernis durch den Fahrer oder durch das Fahrassistenzsystem als ein überfahrbares, insbesondere ein be-, unter-, über-, oder durchfahrbares, oder als ein nicht-überfahrbares, insbesondere ein nicht be-, unter-, über-, oder durchfahrbares, Hindernis klassifiziert. Die Information über die Klassifizierung kann in dem Fahrassistenzsystem gespeichert werden. Insbesondere kann anhand der Klassifizierung eine zukünftige Erkennung des Hindernisses durch die Sensorik des Fahrassistenzsystems verbessert werden. Beispielsweise kann klassifiziert werden, ob das Hindernis Vegetation, ein Lebewesen, ein Bodenbereich, ein Bordstein, ein Gebäude oder eine Infrastruktureinrichtung ist.

Zur Erhöhung der Sicherheit bei der Durchführung des Verfahrens kann das Fahrassistenzsystem Bilddaten aus dem Anlernen mit Bilddaten aus der aktuellen Fahrt vergleichen und Unterschiede erfassen. In Bezug auf einen Unterschied zwischen den Bilddaten kann eine Schwelle festgelegt werden, ab welcher ein zuvor als überfahrbar klassifiziertes Hindernis, beispielsweise ein Busch, nun nicht mehr als überfahrbar eingestuft wird, beispielsweise ein Busch mit einem Menschen in der Nähe oder ein Mensch, welcher sich in dem Busch befindet. Ein weiteres Beispiel kann ein Bordstein sein, welcher alleinstehend als überfahrbar eingestuft wird, bei Vorhandensein eines Tieres in der Nähe jedoch nicht mehr. Zusätzlich kann eine Bestätigung vom Fahrer eingeholt werden bei unklarer oder nicht möglicher Klassifizierung durch das Fahrassistenzsystem, insbesondere dann, wenn ein Lebewesen vermutet wird.

Bevorzugt umfasst das Bearbeiten der Trajektorie durch den Fahrer das Anpassen wenigstens eines Bereichs entlang der Trajektorie. Der Fahrer kann beispielsweise festlegen, dass ein Bereich entlang der Trajektorie als überfahrbar oder nicht überfahrbar eingestuft wird. In einem solchen Bereich können sich insbesondere mehrere potentielle Hindernisse befinden. Das Bearbeiten kann über die Kommunikationseinrichtung, insbesondere das HMI, des Fahrzeugs erfolgen und/oder über ein Online-Interface, z.B. in einem Browser oder einem Mobilgerät.

Das Bearbeiten der Trajektorie kann insbesondere das Klassifizieren umfassen. Somit kann der Fahrer bereits potentielle Hindernisse klassifizieren, bevor dieses durch das Fahrassistenzsystem als möglicherweise unbekannt erkannt wird, sodass die Abfrage an den Fahrer vorteilhaft unterbleiben kann.

Die erfindungsgemäße Aufgabe wird ferner gelöst durch ein Fahrassistenzsystem, ausgebildet zur Durchführung eines Verfahrens gemäß einer der vorgenannten Ausführungsformen. Das Fahrassistenzsystem umfasst zumindest die Sensorik und eine Steuereinrichtung, welche Messdaten der Sensorik auswertet und entsprechende Steuerbefehle ausgibt zur Interaktion mit dem Fahrer und dem Steuern des Fahrzeugs.

Ferner wird die erfindungsgemäße Aufgabe gelöst durch ein Fahrzeug aufweisend das vorbeschriebene Fahrassistenzsystem.

Nachfolgend werden Ausführungsbeispiele der Erfindung anhand der Zeichnungen näher erläutert. Es zeigen:
- Fig. 1: ein Ablaufdiagramm für ein Verfahren zum Betreiben eines Fahrassistenzsystems eines Fahrzeugs zur Behandlung von unbekannten Objekten entlang einer angelernten Trajektorie, und
- Fig. 2: ein Fahrzeug aufweisend eine Steuereinrichtung ausgebildet zur Durchführung des Verfahrens.

In den Figuren weisen dieselben konstruktiven Elemente jeweils dieselben Bezugszeichen auf.

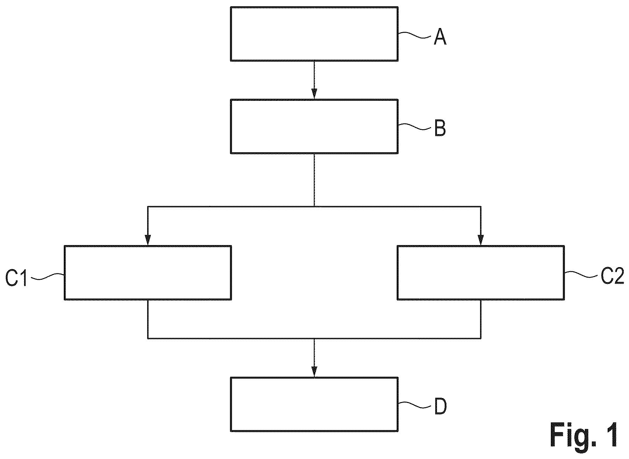

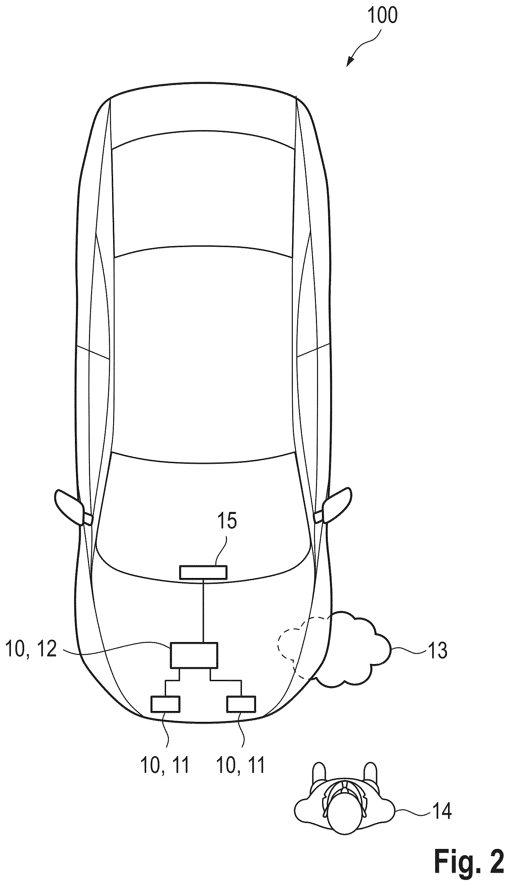

Figur 1 zeigt ein Ablaufdiagramm für ein Verfahren, mittels welchem entlang einer angelernten Trajektorie bisher unbekannte Hindernisse 13, 14, welche in Figur 2 gezeigt sind, erkannt und im Zuge der weiteren Führung eines Fahrzeugs 100, welches in Figur 2 dargestellt ist, gesondert behandelt werden können. Das Verfahren umfasst den Schritt des Führens A des Fahrzeugs 100 entlang der durch das Fahrassistenzsystem 10 angelernten Trajektorie.

Wie in Figur 2 gezeigt, umfasst das Fahrassistenzsystem 10 zumindest eine Sensorik 11 zur Erfassung von Hindernissen 13, 14 in der Umgebung des Fahrzeugs sowie eine Steuereinrichtung 12.

Ein weiterer Schritt des Verfahrens gemäß Figur 1 ist das Erfassen B von wenigstens einem unbekannten Hindernis 13, 14 entlang der Trajektorie, wobei das Hindernis 13, 14 zum Zeitpunkt des Anlernens der Trajektorie nicht erkannt wurde.

Wie in Figur 2 gezeigt, kann es sich bei dem Hindernis um ein überfahrbares Hindernis 13 in Form eines Busches handeln, welcher geringfügig in die Trajektorie hineinragt, sodass das Fahrzeug 100 grundsätzlich an dem Hindernis 13 vorbeifahren könnte. Ferner kann es sich bei dem Hindernis um ein nicht überfahrbares Hindernis 14 handeln, beispielsweise in Form einer Person 14.

Das Fahrassistenzsystem kann nun eine Abfrage an einen Fahrer des Fahrzeugs (100) ausgeben (C) bezüglich des Durchführens einer Maßnahme zur Behandlung des unbekannten Hindernisses (13, 14) durch das Fahrassistenzsystem 10. Die Maßnahme kann beispielsweise ein Abbrechen des Führens des Fahrzeugs 100 entlang der Trajektorie, das Umfahren des Hindernisses 13, 14, ein, insbesondere einmaliges oder dauerhaftes, oder ein Ignorieren des Hindernisses 13, 14 sein.

In dem in Figur 2 gezeigten Fall kann der Fahrer beispielsweise festlegen, dass das Hindernis 13, welches ein flexibler Busch ist, temporär ignoriert werden kann. Im Hinblick auf das Hindernis 14, welches eine Person ist, kann der Fahrer festlegen, dass die automatisierte Fahrt abgebrochen werden soll.

Alternativ kann der Fahrer die Trajektorie in einer Kommunikationseinrichtung bearbeiten (C2), um festzulegen, wie das Hindernis (13, 14) bei der weiteren Fahrt behandelt werden soll.

Sowohl das Ergebnis der Abfrage als auch das Ergebnis des Bearbeitens der Trajektorie durch den Fahrer kann anschließend in dem Fahrassistenzsystem gespeichert werden (D).

### Bezugszeichenliste

- 100: Fahrzeug

- 10: Fahrassistenzsystem
- 11: Sensorik
- 12: Steuereinrichtung
- 13: überfahrbares Hindernis
- 14: nicht-überfahrbares
- 15: Kommunikationseinrichtung

- A, B, C1, C2, D: Verfahrensschritte

## Patentansprüche

1. Verfahren zum Betreiben eines Fahrassistenzsystems (10) eines Fahrzeugs (100) umfassend die folgenden Schritte:
- Führen (A) des Fahrzeugs (100) entlang einer durch das Fahrassistenzsystem (10) angelernten Trajektorie,
- Erfassung (B) von wenigstens einem unbekannten Hindernis (13, 14) entlang der Trajektorie, wobei das Hindernis (13, 14) zum Zeitpunkt des Anlernens der Trajektorie nicht erkannt wurde, und
- Entweder Ausgeben (C1) einer Abfrage an einen Fahrer des Fahrzeugs (100) bezüglich des Durchführens einer Maßnahme zur Behandlung des unbekannten Hindernisses (13, 14) durch das Fahrassistenzsystem (10), und/oder
- Bearbeiten (C2) der Trajektorie in einer Kommunikationseinrichtung (15) durch den Fahrer.

2. Verfahren nach Anspruch 1, wobei das Hindernis (13, 14)Vegetation, ein Lebewesen, ein Bodenbereich, ein Bordstein, ein Gebäude oder eine Infrastruktureinrichtung ist.

3. Verfahren nach einem der vorgenannten Ansprüche, wobei das Erfassen (B) des Hindernisses (13, 14) durch den Fahrer oder durch eine Sensorik (11) des Fahrassistenzsystems (10) erfolgt.

4. Verfahren nach einem der vorgenannten Ansprüche, wobei die Maßnahme ein Abbrechen des Führens des Fahrzeugs (100) entlang der Trajektorie umfasst.

5. Verfahren nach einem der vorgenannten Ansprüche, wobei die Maßnahme das Umfahren des Hindernisses (13, 14) umfasst.

6. Verfahren nach Anspruch 5, wobei der Fahrer das Umfahren des Hindernisses (13, 14) überwacht, oder wobei das Fahrzeug (100) während des Umfahrens des Hindernisses (13, 14) durch den Fahrer geführt wird.

7. Verfahren nach einem der vorgenannten Ansprüche, wobei die Maßnahme ein, insbesondere einmaliges oder dauerhaftes, Ignorieren des Hindernisses (13, 14) umfasst.

8. Verfahren nach einem der vorgenannten Ansprüche, wobei die Maßnahme das Vergrößern oder das Verkleinern eines Sicherheitsabstandes zu dem Hindernis (13, 14) umfasst.

9. Verfahren nach einem der vorgenannten Ansprüche, wobei die Maßnahme das Erhöhen oder das Verringern einer Geschwindigkeit des Fahrzeugs (100) während der Fahrt entlang des Hindernisses (13,14) umfasst.

10. Verfahren nach einem der vorgenannten Ansprüche, wobei das Hindernis (13, 14) in den Daten der Trajektorie gespeichert (D) wird.

11. Verfahren nach einem der vorgenannten Ansprüche, wobei das Hindernis (13, 14) durch den Fahrer oder durch das Fahrassistenzsystem (10) als ein überfahrbares oder als ein nicht-überfahrbares Hindernis (13,14) klassifiziert wird.

12. Verfahren nach einem der vorgenannten Ansprüche, wobei das Bearbeiten der Trajektorie durch den Fahrer das Anpassen wenigstens eines Bereichs entlang der Trajektorie umfasst.

13. Verfahren nach einem der vorgenannten Ansprüche, wobei das Bearbeiten der Trajektorie das Klassifizieren des Hindernisses (13, 14) umfasst.

14. Fahrassistenzsystem (10), ausgebildet zur Durchführung eines Verfahrens nach einem der Ansprüche 1 bis 13.

15. Fahrzeug (100), aufweisend ein Fahrassistenzsystem (10) nach Anspruch 14.
